(19) Europäisches Patentamt

European Patent Office

Office européen des brevets

(11) **EP 3 057 358 B1**

(12) **EUROPEAN PATENT SPECIFICATION**

(45) Date of publication and mention
of the grant of the patent:
**14.02.2018 Bulletin 2018/07**

(51) Int Cl.:
*H04W 36/00* *(2009.01)*

(21) Application number: **15192140.0**

(22) Date of filing: **29.10.2015**

(54) **METHOD AND SYSTEM FOR AUTOMATICALLY CREATING A NEIGHBOR LIST**

VERFAHREN UND SYSTEM ZUR AUTOMATISCHEN ERZEUGUNG EINER NACHBARSLISTE

PROCÉDÉ ET SYSTÈME PERMETTANT DE CRÉER AUTOMATIQUEMENT UNE LISTE DE VOISINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2015 IN 673CH2015
26.03.2015 US 201514669085**

(43) Date of publication of application:
**17.08.2016 Bulletin 2016/33**

(73) Proprietor: **Wipro Limited
560 035 Karnataka (IN)**

(72) Inventors:
• **CHAUDHURI, Saptarshi
560068 Karnataka (IN)**
• **BAIG, Irfan
560022 Karnataka (IN)**

(74) Representative: **Finnegan Europe LLP
16 Old Bailey
London EC4M 7EG (GB)**

(56) References cited:
**US-A1- 2013 223 403      US-A1- 2014 073 303**

• **"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP DRAFT; 36300-C40, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5 January 2015 (2015-01-05), XP050920647, Retrieved from the Internet: URL:http://www.3gpp.org/ftp/tsg_ran/WG2_RL 2/Specifications/201412_final_specs_after_ RAN_66/ [retrieved on 2015-01-05]**

• **"22.3.3 Automatic Neighbour Relation Function", 3GPP DRAFT; EXTRACT FROM 36-300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Chengdu, China; 20080424, 24 April 2008 (2008-04-24), XP050307231, [retrieved on 2008-04-24]**

• **HUAWEI: "Automatic Neighbor Relation function", 3GPP DRAFT; R3-080365 ANR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163572, [retrieved on 2008-02-05]**

EP 3 057 358 B1

**Description**

<u>Technical Field</u>

This disclosure relates generally to managing neighbor lists in a wireless communication environment, and more particularly to a method and system for automatically creating a neighbor list.

<u>Background</u>

A Long Term Evolution (LTE) or 4G network is a wireless communication network designed to provide subscribers with a high speed internet experience on their mobile devices without any traffic restrictions either in the mobile device or in the network. One of the requirements of LTE is to provide unbroken connections between base stations, also called Evolved Node Bs or eNodeBs or eNBs, and User Equipment (UEs) moving at high speeds. This feature of providing unbroken connections may be accomplished by a serving base station by performing a handover or handoff to another base station. The serving base station or serving eNB decides when to initiate the handover and to which eNB the UE needs to be handed over. These handovers may be based on the UE signal strength measurements of the Neighbour eNBs.

The serving eNB knows its neighbours through a Neighbour Relation Table (NRT) or a neighbour list. An eNB uses the NRT to determine which neighbour to handover a UE to. Typically, an eNB neighbour is added and maintained manually by the network operator. The neighbour list generation and maintenance may turn out to be a significant overhead in the existing mobile networks especially when the networks are expanded and new eNBs are added. For LTE, the task of manually maintaining a neighbour list is further challenging for operators because in addition to defining intra LTE neighbour relations, the operator also has to provision 2G and 3G neighbours. To overcome this overhead, the 3GPP standard covering LTE specifies an Automatic Neighbour Relation (ANR) function wherein UEs connected to a serving eNB may provide information regarding neighbouring eNBs to the serving eNB. The serving eNB may then update its NRT based on this information. However, in this case, the number of neighbours reported by the UEs may be substantially high and processing the high number of neighbours to decide the target neighbour for handover may be time consuming and computationally intensive.

US 2014/0073303 describes a system, a device, and a method for modifying neighbor relations in a radio access network based on analysis of historical performance of base stations. US 2013/0223403 describes a system, a device, and a method for optimizing a radio network.

<u>SUMMARY</u>

According to an aspect of the present invention there is provided a method for creating a neighbor list associated with a serving base station according to claim 1.

According to a further aspect of the present invention there is provided an apparatus for creating a neighbor list according to claim 8.

In another embodiment, a non-transitory computer-readable storage medium according to claim 15 is disclosed.

It is to be understood that both the foregoing general description and the following detailed description are exemplary and explanatory only and are not restrictive of the invention, as claimed.

<u>BRIEF DESCRIPTION OF THE DRAWINGS</u>

The accompanying drawings, which are incorporated in and constitute a part of this disclosure, illustrate exemplary embodiments and, together with the description, serve to explain the disclosed principles.

**FIG. 1** illustrates an exemplary broadband wireless network architecture in which various embodiments of the present disclosure may function.

**FIG. 2** is a flow diagram illustrating a method of automatically creating a neighbor list in accordance with some embodiments of the present disclosure.

**FIG. 3** is a block diagram illustrating a system for automatically creating a neighbor list in accordance with some embodiments of the present disclosure.

**FIG. 4** is a block diagram of an exemplary computer system for implementing embodiments consistent with the present disclosure.

## DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

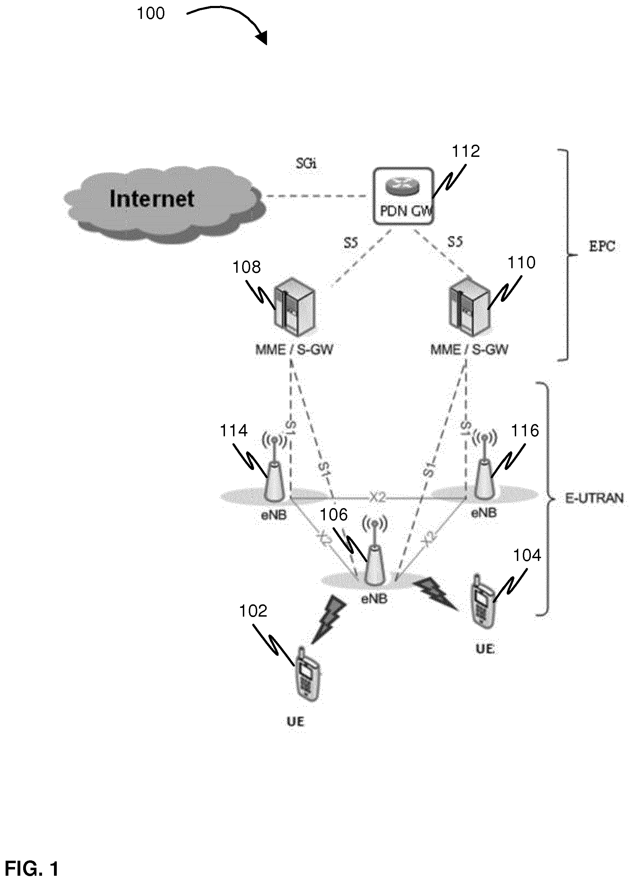

An exemplary high level network 100 depicting a broadband wireless network architecture is illustrated in FIG. 1. For purposes of illustration, the network 100 corresponds to an LTE network. However, the depicted LTE network is merely an exemplary network, and thus it will be understood that the teachings of the disclosure contemplate other broadband wireless networks such as WiMax, High Speed Packet Access (3GPP's HSPA), etc.

In FIG. 1, one or more user equipment (UE) such as UE 102 and UE 104 may communicate wirelessly with an eNB 106 that is an LTE base station. In this case, eNB 106 acts as the serving eNB for both UE 102 and UE 104. The functionalities of eNB 106 may include Radio Resource Management (RRM), header compression and encryption of user data stream, packet scheduling and transmission, physical layer processing, etc. An example of a UE may be a cell phone, PDA, tablet computer, etc. The eNB 106 may communicate with an evolved packet core (EPC) that may include a Mobility Management Entity (MME) associated with a serving gateway (S-GW). The MME and the S-GW are represented together in FIG. 1 as MME / S-GW 108 and MME / S-GW 110 for the sake of simplicity. However, it is to be noted that the MME and the S-GW in some embodiments may be separate and distinct entities. The MME manages and stores UE context and further generates temporary identities and allocates them to UEs. The SGW routes and forwards user data packets, while also acting as the mobility anchor for the user plane during inter-eNB handovers and as the anchor for mobility between LTE and other 3GPP technologies. Network 100 may further include a Packet Data Network Gateway (PDN GW) 112 that provides connectivity to UE 102 and UE 104 to external packet data networks by being the point of exit and entry of traffic for UE 102 and UE 104. A UE may have simultaneous connectivity with more than one PDN GW for accessing multiple PDNs. The PDN GW performs policy enforcement, packet filtering for each user, charging support, lawful Interception, etc.

In addition to the serving eNB 106, network 100 may further include neighboring eNBs such as an eNB 114 and an eNB 116. It is to be noted that, while only eNB 114 and eNB 116 are illustrated as neighbors in FIG. 1 for sake of simplicity, serving eNB 106 may have any number of neighbors. The serving eNB 106 may maintain a neighbor relation table (NRT) that provides information corresponding to neighboring eNBs. The NRT may be used by serving eNB 106 to determine which neighbor to handover a UE to. The NRT maintained by the serving eNB 106 may or may not include eNB 114 and eNB 116. For example, the NRT maintained by eNB 106 may include eNB 114 but not eNB 116. However, eNB 106 may discover neighbor eNB 116 using an Automatic Neighbor Relation (ANR) function. Here, the serving eNB 106 may receive measurement reports from all UEs current served by the eNB 106, that is, from UE 102 and UE 104. The measurement reports may include various signal strength measurements between the UE and a number of eNBs in the vicinity of the UE. In this case, UE 104 may detect a signal from eNB 116 and accordingly provide this information to serving eNB 106. The serving eNB 106 may check its own NRT to verify if eNB 116 has been added as a neighbor. On determining that eNB 116 is not on the NRT, serving eNB 106 may update the NRT to include the discovered neighbor eNB 116.

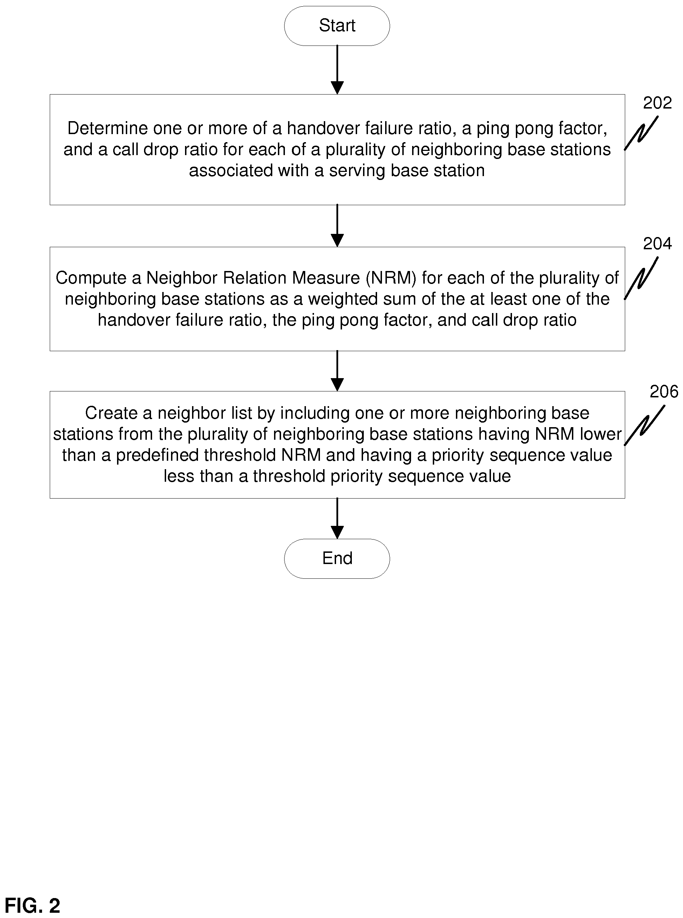

Additional illustrative embodiments are listed below. FIG. 2 illustrates a flow diagram of a method of automatically creating a Neighbor Relation Table (NRT) or a neighbor list associated with a serving base station or eNB. The method may initially include determining at least one of a handover failure ratio, a ping pong factor, and a call drop ratio for each of a plurality of neighboring base stations associated with the serving base station at step 202. The neighboring base stations may be determined from a default NRT maintained by the serving base station. Here, the handover failure ratio associated with a neighbor base station may represent a number of failed handovers to a number of handover attempts made from the serving base station to the neighbor base station. Similarly, a call drop ratio associated with a neighbor base station may correspond to a ratio of call drops to a number of call connection attempts between one or more mobile stations or User Equipment (UE) and the neighbor base station. The ping pong factor associated with a neighboring base station may correspond to the number of times a call is handed back and forth between the serving base station and the neighboring base station in quick succession (time period between handovers is less than the critical time). The handover failure ratio, the ping pong factor, and the call drop ratio will hereinafter be collectively referred as neighbor base station parameters.

On determining the neighbor base station parameters for each neighbor in the default neighbor list, a Neighbor Relation Measure (NRM) may be computed for each of the neighboring base stations at step 204. The NRM for a base station may be computed as a weighted sum of the handover failure ratio, the ping pong factor, and the call drop ratio associated with that base station. The weights assigned to each of the neighbor base station parameters may be based on a current network traffic profile and may have a value ranging from 0 to 1. For example, the network traffic may be categorized as high traffic, medium traffic and low traffic based on different times of day. Exemplarily, the time window between 10 am and 12 am may be construed to have high network traffic and the time window between 12 am to 7 am may be construed to have low traffic. Accordingly, the weight assigned to the neighbor base station parameters may vary from 0 to 1 depending on the time of day. If W1(t) is the weight associated with the handover failure parameter for a particular time of day, W2(t) is the weight associated with the call drop parameter for the particular time of day, and W3(t) is the weight associated with the ping pong parameter for the particular time of day, then:

$$NRM_i = W1(T) * \%HOF + W2(t) * \%CD + W3(t) * \%PP$$

where $NRM_i$ represents the NRM of an ith neighbor base station and %*HOF,* %*CD,* and %*PP* are the handover failure ratio, the call drop ratio, and the ping pong factor respectively.

Once the NRM is computed for each of the neighboring base stations in the default neighbor list, one or more optimized neighbors may be determined. A neighbor list comprising the optimized neighbors may be created by including one or more of the neighboring base stations that have an NRM lower than a predefined threshold and having a priority sequence value less than a threshold priority sequence value at step 206. The priority sequence may comprise a sequence of neighbor base station parameters that defines which neighbor base station parameters take precedence over other base station parameters. A priority sequence value is the value of a neighbor base station parameter in the priority sequence. The priority sequence may comprise a sequence of neighbor base station parameters that assume priority based on conditions in the network, such as the level of network traffic. Alternatively or in addition, the priority sequence may comprise a sequence of neighbor base station parameters that assume priority based on different times of day. For example, during high network traffic times, the call drop ratio may be considered to have less priority than either the ping pong factor or the handover failure ratio when determining an optimal neighbor. In this case, due to the high call traffic, a few call drops may be considered acceptable as long as the majority of calls are not interrupted due to handover failure or ping pong effect. Here, in addition to a neighboring base station's NRM being lower than a threshold NRM, if the values of the ping pong factor and values of the handover failure ratio are below a predefined threshold for the ping pong factor and the handover failure respectively, then the neighboring base station may be included in the neighbor list.

In some embodiments, on determining the optimal neighbor base stations, weights assigned to the neighbor base station parameters for a traffic profile may be automatically tuned or modified based on values of the neighbor base station parameters averaged across all the neighboring base stations. For example, between two iterations of determining the optimal neighbors to include in a neighbor list, if the average value of the handover failure ratio has increased for a particular traffic profile, then the weight associated with the handover failure ratio for the particular traffic profile may be increased. Optimizing the weights at each iteration based on the actual neighbor base station parameters enables a more accurate computation of the NRM for each neighbor base station.

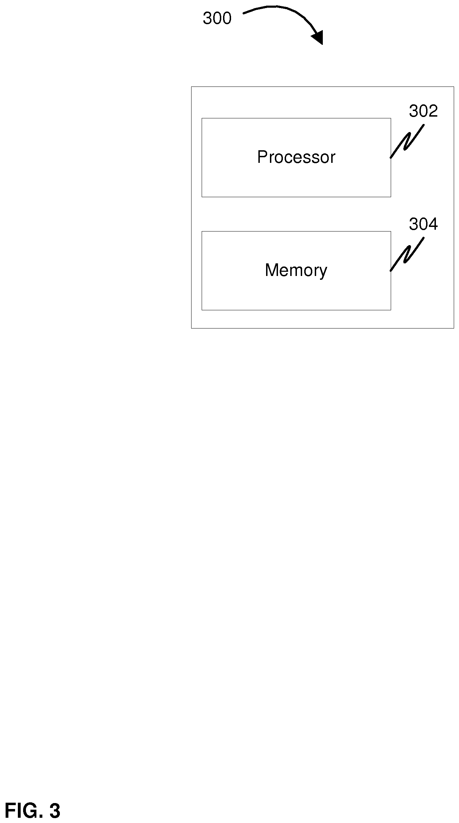

FIG. 3 illustrates a block diagram of an apparatus 300 for creating a neighbor list in accordance with some embodiments of the present disclosure. Apparatus 300 may be associated with a serving base station and may include a processor 302 and a memory 304 disposed in communication with processor 302 and storing processor-executable instructions. The instructions may include instructions to determine at least one of a handover failure ratio, a ping pong factor, and a call drop ratio for each of a plurality of neighboring base stations associated with the serving base station. The neighboring base stations may be determined from a default neighbor relation table maintained by the serving base station. The handover failure ratio for a neighbor base station may represent a number of failed handovers to a number of handover attempts made from the serving base station to the neighbor base station. Similarly, a call drop ratio associated with a neighbor base station may correspond to a ratio of call drops to a number of call connection attempts between one or more mobile stations or User Equipment (UE) and the neighbor base station. The ping pong factor may represent the number of times a call is handed back and forth between the serving base station and the neighboring base station in quick succession (time period between handovers is less than the critical time).

On determining the neighbor base station parameters for each neighbor in the default neighbor list, processor 302 may compute a Neighbor Relation Measure (NRM) for each of the neighboring base stations. The NRM for a base station may be computed as a weighted sum of the handover failure ratio, the ping pong factor, and the call drop ratio associated with that base station as explained in conjunction with FIG. 2. Once the NRM is computed for each of the neighboring base stations, processor 302 may identify one or more optimal neighbor base stations to include in the neighbor list. Neighboring base stations that have an NRM lower than a predefined threshold and having a priority sequence value less than a threshold priority sequence value may be identified as optimal neighbors as explained in conjunction with FIG. 2.

In some embodiments, on determining the optimal neighbor base stations, processor 302 may automatically modify the weights assigned to the neighbor base station parameters for a traffic profile based on values of the neighbor base station parameters averaged across all the neighboring base stations. Optimizing the weights at each iteration based on the actual neighbor base station parameters enables a more accurate computation of the NRM for each neighbor base station.

Computer System

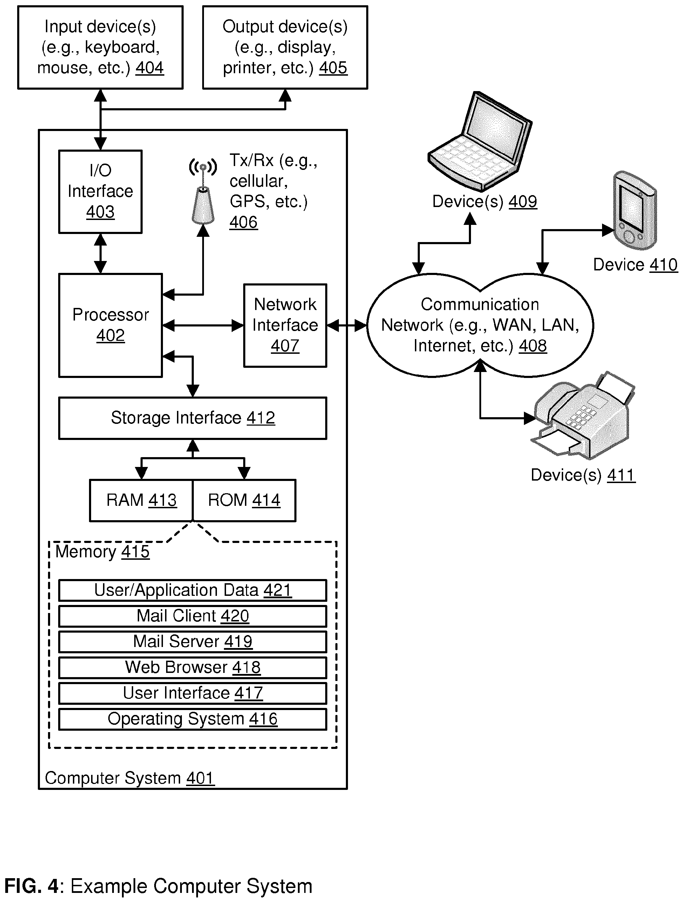

**FIG. 4** is a block diagram of an exemplary computer system for implementing embodiments consistent with the present disclosure. Variations of computer system 401 may be used for implementing apparatus 300 for automatically creating a neighbor list. Computer system 401 may comprise a central processing unit ("CPU" or "processor") 402. Processor 402 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), highspeed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 408 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 410, 411, and 412. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described a method of automatically creating a neighbor list associated with a serving eNB. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments, according to the claims.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for creating a neighbor list associated with a serving base station (106), the method being performed by an apparatus associated with the serving base station and **characterised by**:

   determining (202) a set of neighbor base station parameters comprising a handover failure ratio, a ping pong factor, and a call drop ratio for each of a plurality of neighboring base stations associated with the serving base station;
   computing (204) a Neighbor Relation Measure, NRM, for each of the plurality of neighboring base stations as a weighted sum of the handover failure ratio, the ping pong factor, and the call drop ratio associated with each of the plurality of neighboring base stations;

determining (206), based on conditions in a network, a priority sequence that defines a first neighbor base station parameter of the set of neighbor base station parameters that takes precedence over other neighbor base station parameters of the set of neighbor base station parameters; and

creating (206) a neighbor list by including one or more neighboring base stations from the plurality of neighboring base stations having an NRM lower than a predefined threshold NRM and having a value of the first neighbor base station parameter that is lower than a predefined threshold value associated with the first neighbor base station parameter.

2. The method of claim 1, wherein the handover failure ratio of a neighboring base station is a ratio of a number of failed handovers to a number of handover attempts made from the serving base station to the neighboring base station.

3. The method of any of the preceding claims, wherein the ping pong factor of a neighboring base station is a number of times a call is handed over from the serving base station to the neighboring base station and back from the neighboring base station to the serving base station in less than a predefined critical time.

4. The method of any of the preceding claims, wherein the call drop ratio is a ratio of a number of call drops to a number of call connection attempts.

5. The method of any of the preceding claims, wherein a weight associated with each of the handover failure ratio, the ping pong factor, and the call drop ratio is based on a network traffic profile.

6. The method of any of the preceding claims, wherein the priority sequence comprises a priority associated with each of the handover failure ratio, the ping pong factor, and the call drop ratio during a predefined time period.

7. The method of any of the preceding claims, further comprising modifying a weight associated with each of the handover failure ratio, the ping pong factor, and the call drop ratio based on an average value of the handover failure ratio, an average value of the ping pong factor, and an average value of the call drop ratio across the neighboring base stations associated with the neighbor list.

8. An apparatus (300) for creating a neighbor list, the apparatus associated with a serving base station, comprising:

a processor (302); and
a memory (304) communicatively coupled to the processor (302), wherein the memory (304) stores processor-executable instructions,

**characterised in that** the instructions, on execution, cause the processor (302) to:

determine (202) a set of neighbor base station parameters comprising a handover failure ratio, a ping pong factor, and a call drop ratio for each of a plurality of neighboring base stations associated with the serving base station;

compute (204) a Neighbor Relation Measure, NRM, for each of the plurality of neighboring base stations as a weighted sum of the handover failure ratio, the ping pong factor, and the call drop ratio associated with each of the plurality of neighboring base stations;

determine (206), based on conditions in a network, a priority sequence that defines a first neighbor base station parameter of the set of neighbor base station parameters that takes precedence over other neighbor base station parameters of the set of neighbor base station parameters; and

create (206) a neighbor list by including one or more neighboring base stations from the plurality of neighboring base stations having an NRM lower than a predefined threshold NRM and having a value of the first neighbor base station parameter that is lower than a predefined threshold value associated with the first neighbor base station parameter.

9. The apparatus of claim 8, wherein the handover failure ratio is a ratio of a number of failed handovers to a number of handover attempts.

10. The apparatus of claim 8 or claim 9, wherein the ping pong factor of a neighboring base station is a number of times a call is handed over from the serving base station to the neighboring base station and back from the neighboring base station to the serving base station in less than a predefined critical time.

11. The apparatus of any of claims 8 to 10, wherein the call drop ratio is a ratio of a number of call drops to a number of call connection attempts.

12. The apparatus of any of claims 8 to 11, wherein a weight associated with each of the handover failure ratio, the ping pong factor, and the call drop ratio is based on a network traffic profile.

13. The apparatus of any of claims 8 to 12, wherein the priority sequence comprises a priority associated with each of the handover failure ratio, the ping pong factor, and the call drop ratio during a predefined time period.

14. The apparatus of any of claims 8 to 13, wherein the memory further stores instructions to modify a weight associated with each of the handover failure ratio, the ping pong factor, and the call drop ratio based on an average value of the handover failure ratio, an average value of the ping pong factor, and an average value of the call drop ratio across the neighboring base stations associated with the neighbor list.

15. A non-transitory computer readable medium including instructions stored thereon that when processed by at least one processor cause a system to perform the method of any of claims 1 to 7.

**Patentansprüche**

1. Verfahren zum Erzeugen einer Nachbarliste, die einer bedienenden Basisstation (106) zugeordnet ist, wobei das Verfahren von einer Vorrichtung durchgeführt wird, die der bedienenden Basisstation zugeordnet ist und die **gekennzeichnet ist durch**:

   Bestimmen (202) einer Reihe von Nachbarbasisstationsparametern, umfassend ein Handover-Fehlerverhältnis, einen Ping-Pong-Faktor und ein Anrufunterbrechungsverhältnis für jede einer Vielzahl von benachbarten Basisstationen, die der bedienenden Basisstation zugeordnet sind;
   Berechnen (204) eines Nachbarverhältnismaßes (Neighbor Relation Measure, NRM) für jede der Vielzahl von benachbarten Basisstationen als eine gewichtete Summe des Handover-Fehlerverhältnisses, des Ping-Pong-Faktors und des Anrufunterbrechungsverhältnisses, das jeder der Vielzahl von benachbarten Basisstationen zugeordnet ist;
   Bestimmen (206), basierend auf den Bedingungen in einem Netzwerk, einer Prioritätssequenz, die einen ersten Nachbarbasisstationsparameter von der Reihe von Nachbarbasisstationsparametern definiert, der vor anderen Nachbarbasisstationsparametern der Reihe von Nachbarbasisstationsparametern Vorrang hat; und
   Erzeugen (206) einer Nachbarliste **durch** Hinzufügen von einer oder mehreren benachbarten Basisstationen von der Vielzahl von benachbarten Basisstationen mit einem NRM, das kleiner ist als ein vordefiniertes Schwellen-NRM und das einen Wert des ersten Nachbarbasisstationsparametersaufweist, der kleiner ist als ein vordefinierter Schwellenwert, der dem ersten Nachbarbasisstationsparameter zugeordnet ist.

2. Verfahren nach Anspruch 1, wobei das Handover-Fehlerverhältnis einer benachbarten Basisstation ein Verhältnis aus einer Anzahl an fehlgeschlagenen Handovern zu einer Anzahl an Handover-Versuchen ist, die von der bedienenden Basisstation zur benachbarten Basisstation erfolgen.

3. Verfahren nach einem der vorhergehenden Ansprüche, wobei der Ping-Pong-Faktor einer benachbarten Basisstation eine Anzahl der Male ist, bei denen ein Anruf von der bedienenden Basisstation an die benachbarte Basisstation und von der benachbarten Basisstation zurück zur bedienenden Basisstation in weniger als einer vordefinierten kritischen Zeit übergeben wird.

4. Verfahren nach einem der vorhergehenden Ansprüche, wobei das Anrufunterbrechungsverhältnis ein Verhältnis von einer Anzahl an Anrufunterbrechungen zu einer Anzahl an Anrufverbindungsversuchen ist.

5. Verfahren nach einem der vorhergehenden Ansprüche, wobei ein Gewicht, das jedem des Handover-Fehlerverhältnisses, des Ping-Pong-Faktors und des Anrufunterbrechungsverhältnisses zugeordnet ist, auf einem Netzwerkverkehrsprofil basiert.

**6.** Verfahren nach einem der vorhergehenden Ansprüche, wobei die Prioritätssequenz eine Priorität umfasst, die jedem des Handover-Fehlerverhältnisses, des Ping-Pong-Faktors und des Anrufunterbrechungsverhältnisses während einer vordefinierten Zeitdauer zugeordnet ist.

**7.** Verfahren nach einem der vorhergehenden Ansprüche, ferner umfassend das Modifizieren eines Gewichts, das jedem des Handover-Fehlerverhältnisses, des Ping-Pong-Faktors und des Anrufunterbrechungsverhältnisses zugeordnet ist, basierend auf einem Durchschnittswert des Handover-Fehlerverhältnisses, einem Durchschnittswert des Ping-Pong-Faktors und einem Durchschnittsverhältnis des Anrufunterbrechungsverhältnisses quer über die benachbarten Basisstationen, die der Nachbarliste zugeordnet sind.

**8.** Vorrichtung (300) zum Erzeugen einer Nachbarliste, wobei die Vorrichtung, die einer bedienenden Basisstation zugeordnet ist, Folgendes umfasst:

einen Prozessor (302); und
einen Speicher (304), der an den Prozessor (302) kommunikativ gekoppelt ist, wobei der Speicher (304) Anweisungen speichert, die vom Prozessor ausgeführt werden können,

**dadurch gekennzeichnet, dass** die Anweisungen, bei Ausführung, den Prozessor (302) zu Folgendem veranlassen:

Bestimmen (202) einer Reihe von Nachbarbasisstationsparametern, umfassend ein Handover-Fehlerverhältnis, einen Ping-Pong-Faktor und ein Anrufunterbrechungsverhältnis für jede einer Vielzahl von benachbarten Basisstationen, die der bedienenden Basisstation zugeordnet sind;
Berechnen (204) eines Nachbarverhältnismaßes, NRM, für jede der Vielzahl von benachbarten Basisstationen als eine gewichtete Summe von dem Handover-Fehlerverhältnis, dem Ping-Pong-Faktor und dem Anrufunterbrechungsverhältnis, die jeder der Vielzahl von benachbarten Basisstationen zugeordnet ist;
Bestimmen (206), basierend auf den Bedingungen in einem Netzwerk, einer Prioritätssequenz, die einen ersten Nachbarbasisstationsparameter von der Reihe von Nachbarbasisstationsparametern definiert, die vor anderen Nachbarbasisstationsparametern der Reihe von Nachbarbasisstationsparametern Vorrang haben; und
Erzeugen (206) einer Nachbarliste durch Hinzufügen einer oder mehrerer benachbarten Basisstationen aus der Vielzahl von benachbarten Basisstationen mit einem NRM, das kleiner ist als ein vordefiniertes Schwellen-NRM und das einen Wert des ersten Nachbarbasisstationsparameters aufweist, der kleiner ist als ein vordefinierter Schwellenwert, der dem ersten Nachbarbasisstationsparameter zugeordnet ist.

**9.** Vorrichtung nach Anspruch 8, wobei das Handover-Fehlerverhältnis ein Verhältnis von einer Anzahl an fehlgeschlagenen Handovern zu einer Anzahl an Handover-Versuchen ist.

**10.** Vorrichtung nach Anspruch 8 oder 9, wobei der Ping-Pong-Faktor einer benachbarten Basisstation eine Anzahl an Malen ist, bei denen ein Anruf von der bedienenden Basisstation an die benachbarte Basisstation und von der benachbarten Basisstation zurück an die bedienende Basisstation in weniger als einer vordefinierten kritischen Zeit übergeben wird.

**11.** Vorrichtung nach einem der Ansprüche 8 bis 10, wobei das Anrufunterbrechungsverhältnis ein Verhältnis von einer Anzahl an Anrufunterbrechungen zu einer Anzahl an Anrufverbindungsversuchen ist.

**12.** Vorrichtung nach einem der Ansprüche 8 bis 11, wobei ein Gewicht, das jedem des Handover-Fehlerverhältnisses, des Ping-Pong-Faktors und des Anrufunterbrechungsverhältnisses zugeordnet ist, auf einem Netzwerkverkehrsprofil basiert.

**13.** Vorrichtung nach einem der Ansprüche 8 bis 12, wobei die Prioritätssequenz eine Priorität umfasst, die jedem des Handover-Fehlerverhältnisses, des Ping-Pong-Faktors und des Anrufunterbrechungsverhältnisses während einer vordefinierten Zeitdauer zugeordnet ist.

**14.** Vorrichtung nach einem der Ansprüche 8 bis 13, wobei der Speicher ferner Anweisungen speichert, um ein Gewicht zu modifizieren, das jedem des Handover-Fehlerverhältnisses, des Ping-Pong-Faktors und des Anrufunterbrechungsverhältnisses zugeordnet ist, basierend auf einem Durchschnittswert des Handover-Fehlerverhältnisses, einem Durchschnittswert des Ping-Pong-Faktors und einem Durchschnittswert des Anrufunterbrechungsverhältnisses quer über die benachbarten Basisstationen, die der Nachbarliste zugeordnet sind.

15. Nichtflüchtiges computerlesbares Medium, beinhaltend darauf gespeicherte Anweisungen, die, wenn sie von mindestens einem Prozessor verarbeitet werden, ein System dazu veranlassen, das Verfahren nach einem der Ansprüche 1 bis 7 durchzuführen.

## Revendications

1. Méthode de création d'une liste de voisins associée avec une station de base de desserte (106), la méthode étant effectuée par un appareil associé avec la station de base de desserte, et elle est **caractérisée par** :

   la détermination (202) d'un jeu de paramètres de station de base voisine comprenant un taux d'échec de transfert intercellulaire, un facteur ping-pong, et un ratio de coupures d'appels pour chacune de la pluralité de stations de base voisines associées avec la station de base de desserte ;
   le calcul (204) d'une mesure de relations de voisinage, NRM, pour chacune de la pluralité de stations de base voisines en tant que somme pondérée du taux d'échec de transfert intercellulaire, du facteur ping-pong, et du ratio de coupures d'appels pour chacune de la pluralité de stations de base voisines ;
   la détermination (206), sur la base de conditions du réseau, d'une séquence de priorités définissant un premier paramètre de stations de base voisines du jeu de paramètres de stations de base voisines ayant priorité sur d'autres paramètres de stations de base voisines du jeu de paramètres de stations de base voisines ; et
   la création (206) d'une liste de voisins en incorporant une ou plusieurs stations de base voisines de la pluralité de stations de base voisines ayant une mesure NRM inférieure à une NRM seuil prédéfinie, et dont la valeur du premier paramètre de stations de base voisines est inférieure à une valeur seuil prédéfinie associée avec le premier paramètre de stations de base voisines.

2. Méthode selon la revendication 1, le taux d'échec de transfert intercellulaire d'une station de base voisine étant un ratio d'un nombre de transferts ayant échoué sur un nombre d'essais de transfert effectués de la station de base de desserte à la station de base voisine.

3. Méthode selon une quelconque des revendications précédentes, le facteur ping-pong d'une station de base voisine étant un nombre de fois qu'un appel est transféré de la station de base de desserte à la station de base voisine, puis de nouveau de la station de base voisine à la station de base de desserte dans un temps inférieur à un temps critique prédéfini.

4. Méthode selon une quelconque des revendications précédentes, le ratio de coupures d'appels étant un ratio d'un nombre de coupures d'appels sur un nombre de tentatives d'établissement d'appel.

5. Méthode selon une quelconque des revendications précédentes, une pondération associée avec chacun des suivants : ratio d'échec de transfert intercellulaire, facteur ping-pong, et ratio de coupures d'appels, étant basée sur un profil de trafic réseau.

6. Méthode selon une quelconque des revendications précédentes, la séquence de priorité comprenant une priorité associée avec chacun des suivants : ratio d'échec de transfert intercellulaire, facteur ping-pong, et ratio de coupures d'appels au cours d'une période prédéfinie.

7. Méthode selon une quelconque des revendications précédentes, comprenant en outre la modification d'une pondération associée avec chacun des suivants : ratio d'échec de transfert intercellulaire, facteur ping-pong, et ratio de coupures d'appels, sur la base d'une valeur moyenne du ratio d'échec de transfert intercellulaire, d'une valeur moyenne du facteur ping-pong, et d'une valeur moyenne du ratio de coupures d'appels dans toutes les stations de base voisines associées avec la liste de voisins.

8. Appareil (300) pour la création d'une liste de voisins, l'appareil étant associé avec une station de base de desserte, comprenant :

   un processeur (302) ; et
   une mémoire (304) couplée en communication au processeur (302), la mémoire (304) assurant le stockage d'instructions exécutables par un processeur,

   **caractérisé en ce que**, lors de l'exécution des instructions, le processeur (302) :

détermine (202) un jeu de paramètres de station de base voisine comprenant un taux d'échec de transfert intercellulaire, un facteur ping-pong, et un ratio de coupures d'appels pour chacune de la pluralité de stations de base voisines associées avec la station de base de desserte ;

calcule (204) une mesure de relations de voisinage, NRM, pour chacune de la pluralité de stations de base voisines en tant que somme pondérée du taux d'échec de transfert intercellulaire, du facteur ping-pong, et du ratio de coupures d'appels associé avec chacune de la pluralité de stations de base voisines ;

détermine (206), sur la base de conditions du réseau, une séquence de priorités définissant un premier paramètre de stations de base voisines du jeu de paramètres de stations de base voisines ayant priorité sur d'autres paramètres de stations de base voisines du jeu de paramètres de stations de base voisines ; et

crée (206) une liste de voisins en incorporant une ou plusieurs stations de base voisines parmi la pluralité de stations de base voisines dont la mesure NRM est inférieure à une NRM seuil prédéfinie, et dont la valeur du premier paramètre de stations de base voisines est inférieure à une valeur seuil prédéfinie associée avec le premier paramètre de stations de base voisines.

9. Appareil selon la revendication 8, le taux d'échec de transfert intercellulaire étant un ratio d'un nombre d'échecs de transferts intercellulaire sur un nombre de tentatives d'établissement d'appel.

10. Appareil selon la revendication 8 ou la revendication 9, le facteur ping-pong d'une station de base voisine étant un nombre de fois qu'un appel est transféré de la station de base de desserte à la station de base voisine, puis de nouveau de la station de base voisine à la station de base de desserte dans un temps inférieur à un temps critique prédéfini.

11. Appareil selon une quelconque des revendications 8 à 10, le ratio de coupures d'appels étant un ratio d'un nombre de coupures d'appels sur un nombre de tentatives d'établissement d'appel.

12. Appareil selon une quelconque des revendications 8 à 11, une pondération associée avec chacun des suivants : ratio d'échec de transfert intercellulaire, facteur ping-pong, et ratio de coupures d'appels, étant basée sur un profil de trafic réseau.

13. Appareil selon une quelconque des revendications 8 à 12, la séquence de priorité comprenant une priorité associée avec chacun des suivants : ratio d'échec de transfert intercellulaire, facteur ping-pong, et ratio de coupures d'appels au cours d'une période prédéfinie.

14. Appareil selon une quelconque des revendications 8 à 13, la mémoire stockant en outre des instructions pour modifier une pondération associée avec chacun des suivants : ratio d'échec de transfert intercellulaire, facteur ping-pong, et ratio de coupures d'appels, sur la base d'une valeur moyenne du ratio d'échec de transfert intercellulaire, d'une valeur moyenne du facteur ping-pong, et d'une valeur moyenne du ratio de coupures d'appels dans toutes les stations de base voisines associées avec la liste de voisins.

15. Support non transitoire lisible par ordinateur comprenant des instructions stockées dans celui-ci, qui, lors de leur traitement par au moins un processeur, entraîne l'exécution, par un système, de la méthode d'une quelconque des revendications 1 à 7.

**FIG. 1**

Start

Determine one or more of a handover failure ratio, a ping pong factor, and a call drop ratio for each of a plurality of neighboring base stations associated with a serving base station

202

Compute a Neighbor Relation Measure (NRM) for each of the plurality of neighboring base stations as a weighted sum of the at least one of the handover failure ratio, the ping pong factor, and call drop ratio

204

Create a neighbor list by including one or more neighboring base stations from the plurality of neighboring base stations having NRM lower than a predefined threshold NRM and having a priority sequence value less than a threshold priority sequence value

206

End

**FIG. 2**

300

302

Processor

304

Memory

FIG. 3

**FIG. 4**: Example Computer System

**REFERENCES CITED IN THE DESCRIPTION**

**Patent documents cited in the description**

- US 20140073303 A
- US 20130223403 A